Europäisches Patentamt

European Patent Office

Office européen des brevets

(11) Publication number: **0 200 384**
**A2**

(12) **EUROPEAN PATENT APPLICATION**

(21) Application number: **86302542.5**

(22) Date of filing: **07.04.86**

(51) Int. Cl.⁴: **B 60 G 13/18**
**B 60 G 17/08**

(30) Priority: **18.04.85 GB 8509900**

(43) Date of publication of application:
**05.11.86 Bulletin 86/45**

(84) Designated Contracting States:
**BE DE FR GB IT NL SE**

(71) Applicant: **BL TECHNOLOGY LIMITED**
**106 Oxford Road**
**Uxbridge Middlesex UB8 1EH(GB)**

(72) Inventor: **King, Charles Spencer**
**Old Manor House Cubbington**
**Leamington Spa Warwickshire(GB)**

(72) Inventor: **Fuller, Johnathan Andrew**
**60 Montague Road**
**Warwick Warwickshire(GB)**

(74) Representative: **Unwin, Stephen Geoffrey et al,**
**ARG Patent Department Cowley Body Plant**
**Oxford OX4 5NL(GB)**

(54) A suspension system for a motor vehicle.

(57) A suspension system for a motor vehicle comprising a spring (1) connecting a sprung mass (3) to an unsprung mass (4), a semi-active damper (2B) for damping relative motion between the sprung mass (3) and the unsprung mass (4), and a harmonic vibration absorber, eg. an auxilliary mass (8) with associated spring (9) and damper (10), connected to the unsprung mass (3) to suppress transmission of harmonic vibrations thereof, eg "wheel-hop", to the sprung mass (3) whereby the electronic control (7) of the semi-active damper (2B) need only respond to transducers (6) monitoring behaviour of the sprung mass (3).

FIG. 3

EP 0 200 384 A2

Croydon Printing Company Ltd.

## A SUSPENSION SYSTEM FOR A MOTOR VEHICLE

This invention relates to a suspension system for a motor vehicle.

The suspension of a vehicle has traditionally consisted of a hub and wheel supported by a rubber tyre with a relatively soft spring supporting the body above the hub. The mass supported by the spring is considered "sprung" and the mass not supported by the spring, but supported by the tyre is considered "unsprung". The purpose of the spring is to isolate the body from road undulations. However, there are two resonances associated with such systems which tend to transmit undulations to the body. The first of these, the resonance of the sprung mass on the spring, manifests itself in a four-wheel car as the "primary ride" resonances and these are usually described by the terms "bounce", "heave", "pitch" and "roll". The frequencies of these resonances typically occur in the range 0.8 - 4.0 Hz. The second resonance, that of the unsprung mass on the spring stiffness offered by the tyre, is called 'wheel-hop' and typically occurs at frequencies in the range 10 - 15 Hz.

The traditional suspension described above will isolate the body, or sprung mass, from road inputs above the primary ride frequencies, with the exception that, at wheel hop frequency, the resonance enhances transmission to the body of any road inputs of that frequency. Resonance at any of the primary ride frequencies also enhances transmission giving larger body motions than would occur if the suspension were infinitely rigid.

These two resonant transmission peaks are controlled by the final element of the conventional suspension, the hydraulic damper. This operates in parallel with the spring, between the sprung and unsprung masses. The introduction of damping reduces vibration levels at the resonant frequencies, but at the expense of higher transmission over the remaining frequency range. The value of damping chosen is thus a compromise between control of the resonances and reduction of vibration levels transmitted at frequencies away from the resonant frequencies. This compromise is a result of the nature of the hydraulic dampers conventionally used in the automotive industry, in that the damping force produced is defined solely by the relative velocity of the sprung and unsprung masses. Thus, for a given instantaneous relative velocity, the same damping force is produced regardless of whether the velocity is produced by large, low frequency, motions or by smaller, higher frequency, motions. This is a fundamental limitation on the suitability of the conventional damper for controlling the suspension under all conditions.

Further improvements to vehicle ride have been sought by the replacement of spring and damper, either completely or partially, with a hydraulic ram connected, via a control valve, to a source of hydraulic pressure. The force in the suspension unit could thus be under the instantaneous control of some, probably electronic, control system reacting to signals from sensors such as accelerometers monitoring vehicle behaviour. Such a system is already known, not to optimise ride, but to optimise tyre grip on uneven surfaces and to provide independent choice of primary ride frequencies. This is in contrast to a conventional vehicle where the choice of spring rates for, say, heave frequencies tends to impose pitch and roll frequencies. The use of a similar system to improve ride comfort has been proposed and explored theoretically but this type of system has the disadvantage of requiring power to be input to the suspension which in turn requires power drain on the engine, increased wight and increased cost.

An alternative to this 'active' system is the 'semi-active' system which incorporates the spring and damper of the conventional ('passive') system, but which modulates the force in the damper in a similar manner to the active suspension, with, however, the restriction that only dissipative forces may be produced. The active system, with its power source, can produce not only forces in the same direction as suspension velocity but also forces in opposition, whereas the semi-active can produce only the latter. Theoretical studies indicate considerable benefits of the semi-active system as compared with conventional passive systems, with a large proportion of the benefits of a fully-active system being possible with a semi-active system. The semi-active system is arranged to respond to signals received from sensors such as accelerometer and is preferably capable of changing the damping force within one cycle of the relative motion between the sprung mass and the unsprung mass so that the damping force changes substantially instantaneously with sensed changes in vehicle behaviour.

According to this invention there is provided a suspension system for a vehicle comprising resilient means connecting a sprung mass and an unsprung mass; damping means for damping relative motion between the sprung mass and the unsprung mass by providing a dissipative force opposing the said relative motion; control means for modulating the dissipative force provided by the damping means; and a harmonic vibration absorber attached to the unsprung mass to suppress transmission of harmonic vibrations of the unsprung mass to the sprung mass.

Preferred features of the invention will be apparent from the subsidiary claims of the specification.

This invention will now be described, merely by way of example, with reference to the accompanying drawings, in which:

Figure 1 is a schematic diagram of a conventional suspension system;

Figure 2 is a schematic diagram of a semi-active suspension system;

Figure 3 is a schematic diagram of a suspension system according to this invention;

Figure 4 is a cross-sectional diagram to illustrate a pressure-drop valve used in a preferred embodiment of this invention;

Figure 5 is a cross-sectional diagram of a hydraulic damper incorporating two valves as shown in Figure 4; and

Figure 6 is a cross-sectional diagram of an alternative layout of a hydraulic damper incorporating two such valves.

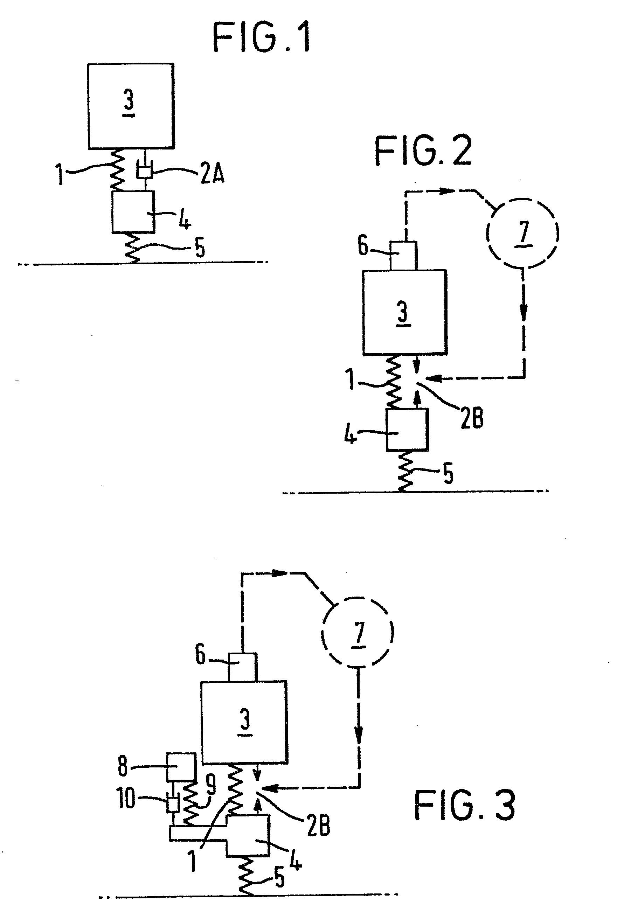

Figure 1 is a schematic diagram of a conventional suspension system as described above in which a spring 1 and damper 2A connect a sprung mass 3 and an unsprung mass 4. A spring 5 is also shown to represent the spring provided by the tyre between the ground and the unsprung mass 4.

Figure 2 is a schematic diagram of a semi-active suspension system as described above having an accelerometer 6 to monitor vehicle behavior and a modified damper 2B which is controlled by an electronic control 7 to provide a selected damping force in dependence upon signals received from the accelerometer 6 and predetermined logic stored within the electronic control 7. The accelerometer 6 provides the electronic control 7 with a signal indicating the acceleration of the sprung mass 3, for instance in a direction away from the unsprung mass 4, and the electronic control 7 provides the modified damper 2B with a signal indicating the required damping force.

The electronic control 7 can be programmed so that the suspension system responds in a desired manner to vehicle behaviour, for instance to improve ride comfort. One way of doing this is to program the system to approximate towards the response which would be provided by an ideal system for instance an arrangement in which the sprung mass is connected by a damper to an inertial reference so that the damping force provided thereby is proportional to the absolute velocity of the sprung mass. Such an ideal system is often referred to as the "skyhook damper" scheme.

The active and semi-active suspension systems described above provide control of vehicle ride in the primary ride frequencies but fail to control wheel-hop vibrations for one of two reasons: firstly, a system which does not detect unsprung mass movement cannot control this and vibrations may then be transmitted to the sprung mass, and, secondly, although tranducers might be fitted to sense the movement of the unsprung mass, and the system might respond to these, the force produced to control the unsprung mass can only be reacted at the sprung mass, which is thus subject to vibration.

This invention provides a semi-active suspension system having a harmonic vibration absorber to control unsprung mass resonance. Figure 3 is a schematic diagram of such a system. The absorber comprises an auxilliary mass 8, which can be very much smaller than the unsprung mass 4 to be controlled, attached to the unsprung mass 4 bu a further spring 9 and a further damper 10. The absorber mass 8 and spring 9 are chosen to resonate at the wheel-hop frequency and the stiffness of the damper 10 is chosen carefully, since excessive damping merely shifts the frequency at which wheel-hop vibrations are transmitted, whilst correct damping substantially supresses transmission of these vibrations to the sprung mass 3.

The use of a harmonic vibration absorber to suppress transmission of wheel-hop frequencies to the sprung mass is known in a conventional suspension system but its use with a semi-active suspension system produces the following advantages.

First, the wheel hop vibrations, and the forces forces required to control these, are reacted, and supressed, by the harmonic absorber mass, whereas without the harmonic absorber the forces required to control vibrations of the unsprung mass can only react against the sprung mass, with resultant transmission of vibration to the sprung mass. Secondly, the weight, complexity and the cost of the semi-active suspension system are reduced as no transducers are required to detect unsprung mass motions. Thirdly, the control logic of the system may be simplified since only sprung mass motions need to be monitored and catered for.

The suspension system described above requires some method of converting an electrical signal into the force developed in the damper. A hydraulic damper produces fluid flow through bleed valves which obstruct the flow thus producing a pressure difference across the damper piston. A valve which produced a pressure-drop controlled by an electrical signal, but substantially independent of fluid velocity, and hence substantially independent of damper stroking speed, would be preferred.

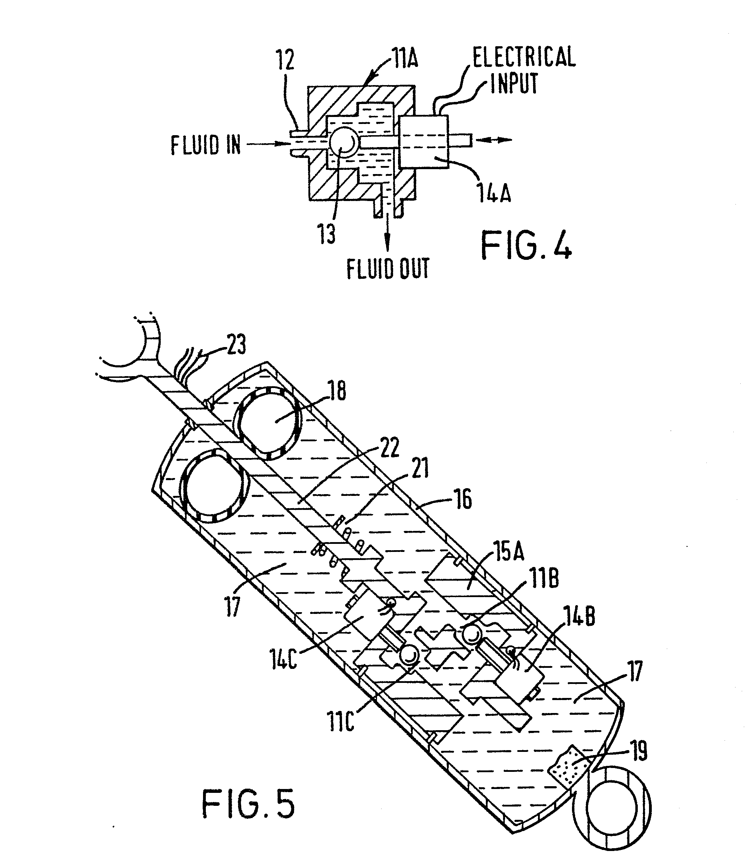

The principle of operation of such a value 11A is illustrated in Fig. 4 Fluid flows through a bleed orifice 12 which is partially obstructed by a sphere 13, or component of any other suitable shape. Whatever shape is chosen, the component 13 is urged towards the orifice 12 by a force transducer 14A which is actuated by a signal and produces a force dependent on that signal. The transducer 14A may be a solenoid, an electric rotary torque motor turning an arm, a linear motor, a magnetostrictive device, or any other suitable device in which the applied force is substantially independent of the valve opening. The pressure in the orifice 12 acts on an area of the component 13 that remains roughly constant as the valve opens, and produces a force on the component 13 to balance the force applied by the transducer 14. Hence, as the flow changes, the component          13          moves          to          vary the restriction of the orifice 12 until the force due to the pressure in the orifice 12 equals the force applied by the transducer 14A which is controlled by a signal received from an electronic control. Flow reversal will shut the valve completely necessitating either a second valve to deal with reverse flow, or an arrangement of non-return valves to pass fluid through a single valve in one direction, whatever the direction of suspension movement.

A preferred form of damper incorporating two force-control valves of the type described above is shown in Fig. 5. During compression of the damper, one valve 11B, the rebound valve, seals when the pressure drop across the piston 15A is such as to cause fluid flow in the 'wrong' direction, while the other valve 11C, the bump valve, acts in the manner described above. During damper extension, the roles of the valves 11B and 11C are reversed. Apart from force-control valves and the requirement to provide electrical signals to the transducers 14B and 14C in the piston body 15A, the remainder of the hydraulic damper is of conventional construction. The piston 15A is slidable within a casing 16 and is surrounded by fluid 17. An expansion space 18 is provided within the fluid and a resilient bump stop 19 is provided at one end of the casing to limit movement of the piston 15A during bump. A rebound stop 21 is provided on a rod 22 connected to the piston 15A to limit movement of the piston body 15A during rebound. Electrical connections 23 pass along a passage within the rod 22 to the transducers 14B and 14C.

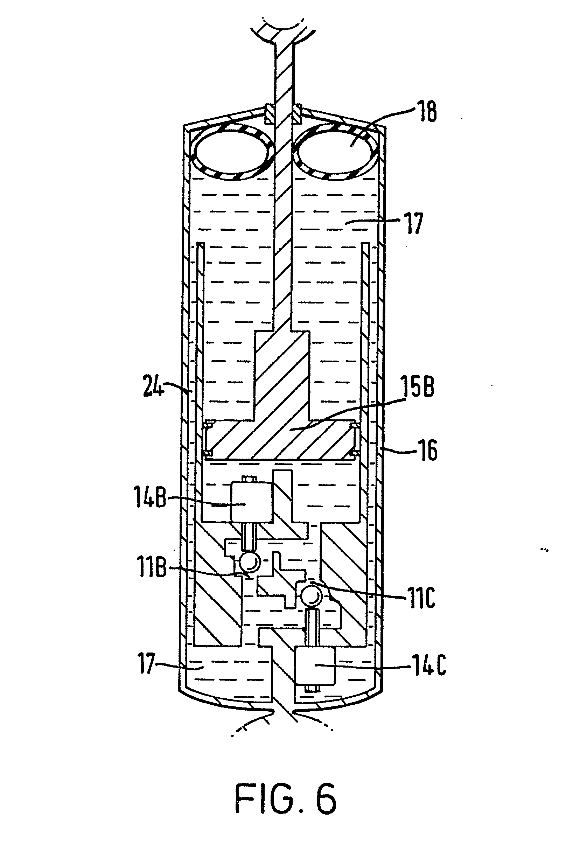

An alternative form of damper incorporating force-control valves is shown in Fig. 6. In this case the valving is incorporated as a 'foot-valve' in the body of the main unit. A plain piston 15B pushes fluid through the twin valve assembly, which functions as described above. In bump, the fluid passing through the valving passes to the other end of the casing 16 via an annular space 24 between inner and outer walls. Again, apart from the force-control valves and the requirement to provide electrical signals to the transducers 14B and 14C, this damper is of conventional construction.

The technique for controlling damper pressure, and hence damping force, described above can be made more accurate by the use of feedback. The pressure drop across the piston in the damper is monitored by a pressure transducer (not shown) and compared, in the electronic control, with the desired value. Any error is corrected by changing the signal fed to the force transducers so that the pressure drop is changed to a value closer to that required. In this way, the slight dependence of the pressure drop on factors other than input signal is corrected.

Alternatively it would be possible to monitor the damper rod force by a load cell (not shown) and to feedback signals received from this to the electronic control.

CLAIMS

1.  A suspension system for a vehicle comprising resilient means connecting a sprung mass and an unsprung mass; damping means for damping relative motion between the sprung mass and the unsprung mass by providing a dissipative force opposing the said relative motion; control means for modulating the dissipative force provided by the damping means; and a harmonic vibration absorber attached to the unsprung mass to suppress transmission of harmonic vibrations of the unsprung mass to the sprung mass.

2.  A system as claimed in claim 1 in which the harmonic vibration absorber comprises further resilient means connecting a further mass to the unsprung mass, the further mass being substantially smaller than the unsprung mass, and further damping means for damping relative motion between the further mass and the unsprung mass.

3.  A system as claimed in claim 1 or 2 in which the control means is arranged to modulate the dissipative force in dependence upon a signal received from a sensor monitoring vehicle behaviour.

4. A system as claimed in claim 3 in which the control means is capable of substantially changing the dissipative force within one cycle of the relative motion between the sprung mass and the unsprung mass and is arranged to modulate the dissipative force substantially instantaneously in dependence upon the said signal and in accordance with predetermined control logic.

5. A system as claimed in claim 3 or 4 in which the sensor is arranged to monitor only behaviour of the sprung mass.

6. A system as claimed in any preceding claim in which the damping means comprises a hydraulic damper and the control means comprises electronically actuated valve means which controls flow of fluid within the damper.

7. A system as claimed in claim 6 when dependent upon claim 3 in which a pressure drop is produced across the valve means in proportion to a control signal applied thereto and substantially independant of the velocity of fluid flow within the damper.

8.  A system as claimed in claim 7 in which the valve means comprises a member which is movable towards and away from a bleed orifice within the damper, the member being urged by an electro-mechanical transducer towards the orifice such that the position adopted by the member is determined by a balance between the force applied thereto by the electro-mechanical transducer and by the fluid pressure in the bleed orifice.

9.  A system as claimed in claim 6, 7 or 8 in which control means comprises first valve means to control flow of fluid in one direction in the damper and second valve means to control flow of fluid in the opposite direction.

10. A system as claimed in claim 9 in which the first and second valve means are positioned within a movable piston of the damper.

11. A system as claimed in claim 9 in which the first and second valve means are positioned in one end of a casing of the damper.

12. A system as claimed in claim 3 or any claim dependent thereon comprising feedback means for monitoring the dissipative force, or a parameter related thereto, provided by the damping means and for adjusting the said signal until the monitored parameter has the desired value.

13. A suspension system for a vehicle substantially as hereinbefore described with reference to Figures 3 to 6 of the accompanying drawings.

0200384

FIG.1

FIG.2

FIG.3

FIG. 4

FIG. 5

0200384

FIG. 6